# EUROPÄISCHE PATENTSCHRIFT

(11) **EP 1 066 175 B1**
(45) Veröffentlichungstag und Bekanntmachung des Hinweises auf die Patenterteilung: **02.06.2004**
(21) Anmeldenummer: 99924710.9
(22) Anmeldetag: 26.03.1999
(51) Int. Cl.: B60R 16/02, B60R 21/00

(54) **VERFAHREN ZUR DATENÜBERTRAGUNG IN EINEM ÜBER EINE BUSLEITUNG VERNETZTEN RÜCKHALTESYSTEM**
DATA TRANSFER METHOD IN A RESTRAINT SYSTEM CONNECTED TO A BUS LINE
PROCEDE DE TRANSFERT DE DONNEES DANS UN SYSTEME DE RETENUE CONNECTE A UNE LIGNE DE BUS

(30) Priorität: 28.03.1998 DE 19813962
(43) Veröffentlichungstag der Anmeldung: 10.01.2001
(73) Patentinhaber: ROBERT BOSCH GMBH, 70442 Stuttgart (DE); Conti Temic Microelectronic GmbH, 90411 Nürnberg (DE)
(72) Erfinder: NITSCHKE, Werner, D-71254 Ditzingen (DE); KARL, Otto, D-71229 Leonberg (DE); BAUER, Joachim, D-71720 Oberstenfeld-Prevorst (DE); BISCHOFF, Michael, D-85111 Adelschlag (DE); FENDT, Günter, D-86529 Schrobenhausen (DE); RINKENS, Johannes, D-85055 Ingolstadt (DE); SCHÄFFER, Stefan, D-86529 Schrobenhausen (DE)
(86) Internationale Anmeldenummer: PCT/DE1999/000937
(87) Internationale Veröffentlichungsnummer: WO 1999/050095

(56) Entgegenhaltungen:
- EP-A- 0 693 401
- WO-A-89/09146
- WO-A-96/38323
- DE-A- 19 546 359
- DE-A- 19 720 400
- US-A- 5 309 436

## Beschreibung

### Stand der Technik

Die vorliegende Erfindung betrifft ein Verfahren zur Datenübertragung in einem über eine Busleitung vernetzten Rückhaltesystem für Fahrzeuginsassen, wobei an die Busleitung eine zentrale Steuereinheit und mehrere Datenverarbeitungseinheiten angekoppelt sind, welche zur Ansteuerung von Rückhalteeinrichtungen an verschiedenen Orten im Fahrzeug vorgesehen sind, und wobei Daten von hoher Priorität und hoher zeitlicher Dringlichkeit mit hohem Signalpegel und hoher Bitrate und Daten von geringerer Priorität und geringerer zeitlicher Dringlichkeit mit niedrigem Signalpegel und niedriger Bitrate übertragen werden.

Die Leistungsfähigkeit der Rückhaltesysteme in Fahrzeugen wird künftig stark zunehmen, um den Schutz der Fahrzeuginsassen weiter zu verbessern. Das bedeutet, daß die Zahl der Rückhalteeinrichtungen und deren zugehörige Auslösemittel im Fahrzeug drastisch ansteigen wird. Zu diesen Rückhalteeinrichtungen gehören dann z.B. mehrstufig zündbare Airbags für den Fahrer und Beifahrer, Kniebags für Fahrer und Beifahrer, Seitenairbags für Fahrer, Beifahrer und Fond-Insassen, wobei Seitenairbags sowohl für den Kopfals auch Thoraxbereich vorgesehen werden können, Gurtstrammer, die auch mehrstufig aktivierbar sind, eventuell auch Überrollbügel etc.. Es wird also für jeden Fahrzeuginsassen ein komplexes Schutzsystem, das aus mehreren Rückhalteeinrichtungen besteht, im Fahrzeug installiert sein. In der deutschen Patentanmeldung 1 961 293 A1 und in den Conference Proceedings des SAE-International Congress & Exposition, 24. - 27.02.1997, Detroit wird in dem Beitrag "Bussystem zur Vernetzung von Aktuatoren für Rückhaltesysteme" von J. Bauer, G. Mehler, W. Nitschke ein komplexes Rückhaltesystem beschrieben. Durch Einführung eines Bussystems, das alle Rückhalteeinrichtungen miteinander vernetzt, konnten voluminöse Kabelbäume eingespart werden. Für jede Rückhalteeinrichtung ist bei diesem bekannten System eine Datenverarbeitungseinheit vorgesehen, die im wesentlichen eine Recheneinheit, Dateneingangs- und Ausgangsschaltungen eine Speichereinheit, eine Zeit- und Taktbasis und eine Stromversorgung aufweist. Diese auch als periphere intelligente Zündendstufe bezeichnete Datenverarbeitungseinheit ist in unmittelbarer Nähe des zu der jeweiligen Rückhalteeinheit gehörenden Auslösemittels, nämlich in einem Zündpillenstecker oder einem Substrat der Zündpille selbst, angeordnet.

Eine an die Busleitung angeschlossene zentrale Steuereinheit ermittelt anhand mehrerer Steuersignale - z.B. von Beschleunigungssensoren, Precrashsensoren, Sitzbelegungssensoren - welche der vorhandenen Rückhalteeinrichtungen auszulösen sind. Signalisieren diese Sensoren einen Crash, so sendet die zentrale Steuereinheit über die Busleitung an alle oder ausgewählte Datenverarbeitungseinheiten einen Auslösebefehl. Dabei adressiert die zentrale Steuereinheit mit Hilfe eines über die Busleitung übertragenen Protokolls diejenigen Datenverarbeitungseinheiten, für die der Auslösebefehl bestimmt ist. Auch Diagnoseanforderungen gehen von der zentralen Steuereinheit aus über die Busleitung an die einzelnen Datenverarbeitungseinheiten, welche ihre Diagnoseantworten wiederum an die zentrale Steuereinheit über den Bus zurücksenden. Die übertragenen Daten sind zwei verschiedenen Kategorien zuzuordnen. Auslösesignale gehören dabei zur Signalkategorie mit höchster Priorität, d.h. Auslösesignale erfordern eine sehr hohe Übertragungssicherheit und sind von sehr hoher zeitlicher Dringlichkeit. Dagegen gehören Diagnoseabfragen und Diagnoseantworten zu einer Signalkategorie mit geringerer Priorität, weil diese Signale keine sehr hohe Übertragungssicherheit und auch keine sehr hohe zeitliche Dringlichkeit erfordern. Gemäß dem genannten Stand der Technik werden zur Unterscheidung der unterschiedlichen Prioritätensignale mit hoher Priorität und hoher zeitlicher Dringlichkeit (Auslösesignale) mit einem hohen Signalpegel und hoher Bitrate und Signale von geringerer Priorität und geringerer zeitlicher Dringlichkeit (Diagnoseabfragen, Diagnoseantworten) mit einem geringeren Signalpegel und niedrigerer Bitrate übertragen. Mit dieser Art der Signalgestaltung lassen sich zwei verschiedene Signalkanäle schaffen, die mit hoher Zuverlässigkeit voneinander separierbar sind.

Der Erfindung liegt nun die Aufgabe zu Grunde, ein Verfahren der eingangs genannten Art anzugeben, mit dem mehr als zwei eindeutig voneinander separierbare Signalkanäle realisierbar sind.

### Vorteile der Erfindung

Die genannte Aufgabe wird mit den Merkmalen des Patentanspruchs 1 dadurch gelöst, daß außer den Daten hoher Priorität und hoher zeitlicher Dringlichkeit und Daten geringerer Priorität und geringerer zeitlicher Dringlichkeit auch Daten von hoher Priorität und geringerer zeitlicher Dringlichkeit mit hohem Signalpegel und niedriger Bitrate und Daten von geringerer Priorität und hoher zeitlicher Dringlichkeit mit niedrigen Signalpegel und hoher Bitrate übertragen werden.

Gemäß den Unteransprüchen können die von der zentralen Steuereinheit an eine oder mehrere Datenverarbeitungseinheiten ausgesendeten Auslösebefehle als Daten mit hoher Priorität und hoher zeitlicher Dringlichkeit behandelt werden. Von der zentralen Steuereinheit an Datenverarbeitungseinheiten ausgesendete Diagnoseabfragen und in umgekehrte Richtung zurückgesendete Diagnoseantworten werden als Daten mit geringerer Pirorität und geringerer zeitlicher Dringlichkeit behandelt. Von der zentralen Steuereinheit an Datenverarbeitungseinheiten ausgesendete Daten zur Programmierung von Adressspeichern in den Datenverarbeitungseinheiten werden als Daten mit hoher Priorität und geringerer zeitlicher Dringlichkeit und z.B. zwischen der zentralen Steuereinheit und Datenverarbeitungseinheiten übertragene Sensorsignale als Daten mit geringerer Priorität und hoher zeitlicher Dringlichkeit behandelt.

Mit insgesamt vier Unterscheidungskriterien - nämlich zwei unterschiedliche Signalpegel und zwei verschiedenen Bitraten - lassen sich erfindungsgemäß vier gut voneinander separierbare Datenkanäle verwirklichen.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild eines Rückhaltesystems,
Figur 2 einen Signalverlauf von vier Datenkanälen mit unterschiedlichen Prioritäten und zeitlichen Dringlichkeiten und
Figur 3 eine Schaltung zur Trennung von vier Datenkanälen.

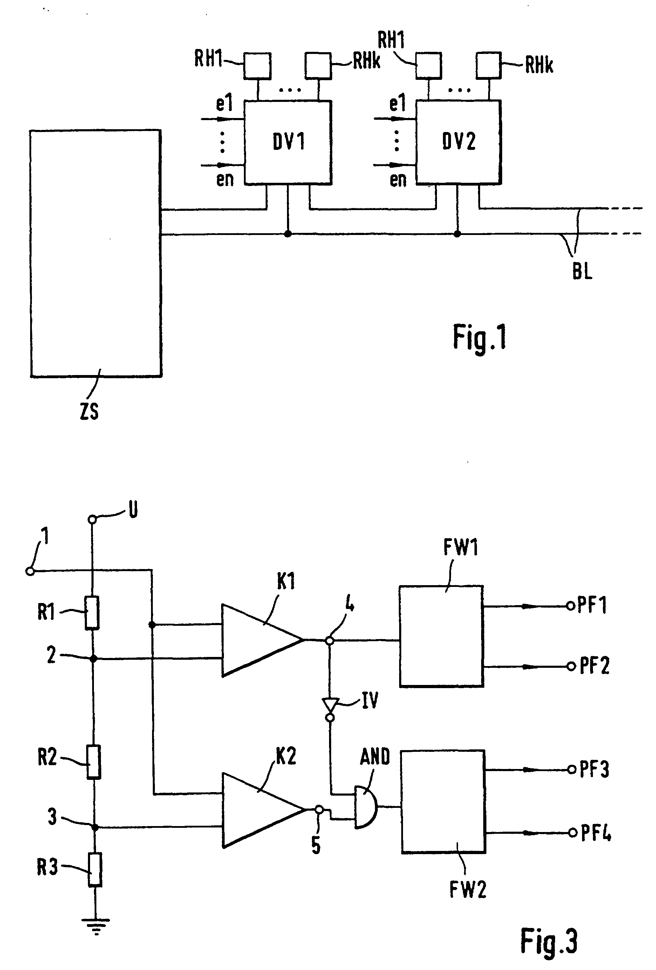

Das in der Figur 1 dargestellte Rückhaltesystem besteht aus einer zentralen Steuereinheit ZS, mit der über eine Busleitung BL mehrere Datenverarbeitungseinheiten DV1, DV2 gekoppelt sind. Jede dieser in der Zeichnung beispielhaft dargestellten zwei Datenverarbeitungseinheiten DV1 und DV2 dient der Ansteuerung einer oder mehrerer Rückhalteeinrichtungen RH1, ..., RHk. Wie bereits einleitend aufgezählt, können zu diesen Rückhalteeinrichtungen RH1, ..., RHk ein oder mehrere mehrstufig zündbare Fahrer- und Beifahrerairbags, Seitenairbags, Gurtstrammer usw. gehören. Gemäß dem Ausführungsbeispiel in Figur 1 weisen die Datenverarbeitungseinheiten DV1 und DV2 neben den Eingängen für die Busleitung BL weitere Eingänge e1, ..., en auf, über welche den Datenverarbeitungseinheiten DV1, DV2 z.B. Sensorsignale von Beschleunigungssensoren, Precrashsensoren oder Sitzbelegungssensoren zugeführt werden können.

In der Figur 1 ist ein Ausschnitt einer Busleitung BL in Form einer Stichleitung dargestellt. Die Busleitung BL kann aber auch die Gestalt einer Ringleitung haben.

Zwischen der zentralen Steuereinheit ZS und den einzelnen Datenverarbeitungseinheiten DV1, DV2 werden über die Busleitung BL verschiedenartige Daten übertragen. Es handelt sich dabei um Daten verschiedener Prioritäten und unterschiedlicher zeitlicher Dringlichkeiten.

Die höchste Priorität aller übertragener Daten besitzen Auslösesignale, und sie sind auch gegenüber allen anderen Daten von höchster zeitlicher Dringlichkeit. Deshalb werden Auslösesignale mit hohem Signalpegel und hoher Bitrate übertragen.

Hohe Priorität besitzen auch Daten, welche die zentrale Steuereinheit zur Programmierung z.B. der Adressen in den Datenverarbeitungseinheiten DV1, DV2 über die Busleitung BL aussendet. Ihre zeitliche Dringlichkeit ist aber nicht so hoch wie die von Auslösesignalen.

Weiterhin gibt es Daten, die eine geringere Priorität haben aber von hoher zeitlicher Dringlichkeit sind. Zu dieser Kategorie von Daten gehören z.B. Daten von Sitzbelegungssensoren oder anderen ausgelagerten Sensoren. Diese Sensorsignale werden dann in der zentralen Steuereinheit ZS oder in Datenverarbeitungseinheiten DV1, DV2 bei der Auswahl auszulösender Rückhalteeinrichtungen RH1, ..., RHk und der Bestimmung der Auslösezeitpunkte berücksichtigt.

Eine vierte Kategorie von Daten sind solche mit geringerer Priorität und geringerer zeitlicher Dringlichkeit. Dazu gehören Diagnoseabfragesignale, welche von der zentralen Steuereinheit ZS an die einzelnen Datenverarbeitungseinheiten DV1, DV2 ausgesendet werden, damit diese die Funktionsfähigkeit der Zündeinrichtungen der mit ihnen verbundenen Rückhalteeinrichtungen RH1, ..., RHk überprüfen. Die Diagnoseantworten, welche die Datenverarbeitungseinheiten DV1, DV2 an die zentrale Steuereinheit ZS zurücksenden, gehören ebenfalls zu dieser Kategorie.

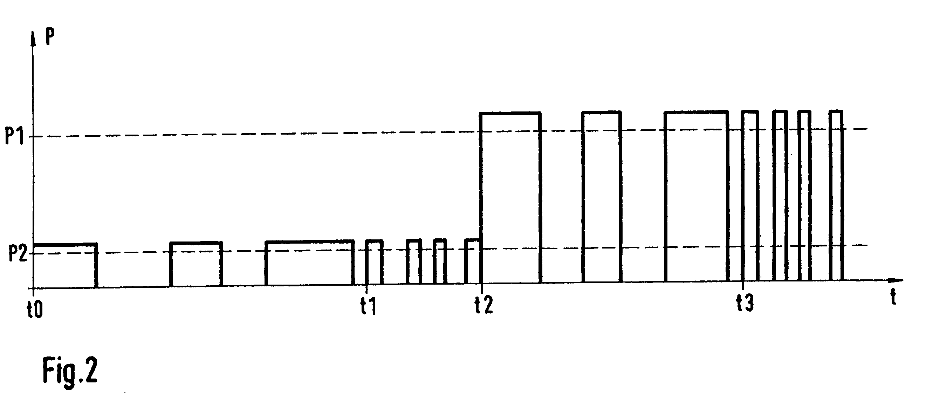

In der Figur 2 sind beispielhaft Signale aller vier Kategorien in einem zeitlichen Signalverlauf dargestellt, wobei es sich entweder um Strom- oder um Spannungssignale mit dem Pegel P handelt. Im Zeitraum t0 bis t1 werden Daten mit geringer Priorität und geringerer zeitlicher Dringlichkeit mit kleinem Pegel und kleiner Bitrate übertragen. Im anschließenden Zeitabschnitt t1 bis t2 sind Daten geringerer Priorität aber mit höherer zeitlicher Dringlichkeit dargestellt, sie werden mit geringem Signalpegel aber höherer Bitrate übertragen. Im Zeitabschnitt t2 bis t3 liegen Daten mit hoher Priorität und geringer zeitlicher Dringlichkeit vor, die mit einem hohen Signalpegel aber geringer Bitrate übertragen werden. Im Zeitabschnitt nach t3 sind Daten mit hoher Priorität und hoher zeitlicher Dringlichkeit dargestellt, die mit hohem Signalpegel und hoher Bitrate übertragen werden.

Um die vier genannten Signalkanäle voneinander separieren zu können, muß in den Datenverarbeitungseinheiten DV1, DV2 und in der zentralen Steuereinheit ZS eine Komparatorschaltung vorhanden sein, welche erkennt, ob ein Signalpegel die obere Pegelschwelle P1 überschreitet oder ob ein Signalpegel über eine untere Pegelschwelle P2, aber nicht über die obere Pegelschwelle P1 hinausgeht. Diejenigen Daten, deren Pegel die obere Pegelschwelle P1 überschreiten, sind Daten hoher Priorität und diejenigen Daten, welche nur die untere Pegelschwelle p2 überschreiten, sind von geringerer Priorität. Des weiteren müssen in der zentralen Steuereinheit ZS und in den Datenverarbeitungseinheiten DV1, DV2 Schaltungsmittel vorhanden sein, die in der Lage sind, Signalen hoher Bitrate von Signalen niedriger Bitrate zu trennen.

Ein Ausführungsbeispiel für eine Schaltung, welche in der Lage ist, alle vier genannten Datenkanäle voneinander zu separieren, ist in der Figur 3 dargestellt. Die Schaltung weist zwei Komparatoren K1 und K2 auf, von denen jeweils ein Eingang mit einem Anschlußpunkt 1 verbunden ist, an dem die zu separierenden Daten anliegen. Der zweite Eingang 2 des Komparators K1 und der zweite Eingang 3 des Komparators K2 erhalten jeweils eine Referenzspannung, die über einen Spannungsteiler R1, R2, R3 von einer Spannung U abgeleitet wird. Die Spannung U und der Spannungsteiler R1, R2, R3 sind so bemessen, daß am Eingang 2 des ersten Komparators K1 eine Referenzspannung anliegt, die der Pegelschwelle P1 entspricht, und daß die am Eingang 3 des zweiten Komparators K2 anliegende Referenzspannung der Pegelschwelle P2 entspricht. Somit erscheinen am Ausgang 4 des ersten Komparators K1 alle Daten hoher Priorität, welche die obere Pegelschwelle P1 überschreiten, und am Ausgang 5 des zweiten Komparators K2 erscheinen alle Daten, welche die Pegelschwelle P2 überschreiten. Da natürlich die Signale hoher Priorität nicht nur die obere Pegelschwelle P1 sondern auch die untere Pegelschwelle P2 überschreiten, dürfen als Daten geringerer Priorität nur diejenigen selektiert werden, welche wohl die untere Pegelschwelle P2 aber nicht die obere PegelschwelleP1 überschreiten. Dazu sind ein Inverter IV für die Ausgangsdaten des Komparators K1 und ein UND-Gatter AND vorgesehen, welches an seinem Ausgang nur dann Ausgangsdaten des Komparators K2 erscheinen läßt, wenn die Eingangsdaten am Tor 1 neben der niedrigen Pegelschwelle P2 nicht auch noch die hohe Pegelschwelle P1 überschreiten.

Am Ausgang 4 des ersten Komparators K1 ist eine erste Frequenzweiche FW1 angeschaltet, und am Ausgang des UND-Gatters AND ist eine zweite Frequenzweiche FW2 angeschlossen. Die erste Frequenzweiche FW1 trennt Daten mit hohen Signalpegeln in Daten mit hoher Bitrate PF1 und Daten niedriger Bitrate PF2. Die zweite Frequenzweiche FW2 separiert Daten mit niedrigen Signalpegeln in Daten mit hoher Bitrate PF3 und Daten mit geringerer Bitrate PF4. Somit läßt sich jedes am Eingang 1 anliegende Datensignal einem der vier Signalkanäle PF1, PF2, PF3 oder PF4 zuordnen. Die Frequenzweichen FW1 und FW2 enthalten z.B. Zähler, mit denen die Bitraten der eingehenden Daten bestimmt werden können, und Komparatoren, welche eine höhere Bitrate von einer niedrigeren Bitrate unterscheiden.

Der Signalverlauf in Figur 2 und die Schaltung in Figur 3 zur Separierung der Datensignale zeigen ein Ausführungsbeispiel, bei dem lediglich zwischen zwei Prioritätsstufen (Signalpegeln) unterschieden wird. Es wäre aber auch eine differenzierte Abstufung der Prioritäten der einzelnen Datensignale möglich, indem mehrere Signalpegel vorgegeben werden.

## Patentansprüche

1. Verfahren zur Datenübertragung in einem über eine Busleitung vernetzten Rückhaltesystem für Fahrzeuginsassen, wobei an die Busleitung (BL) eine zentrale Steuereinheit (ZS) und mehrere Datenverarbeitungseinheiten (DV1, DV2) angekoppelt sind, welche zur Ansteuerung von Rückhalteeinrichtungen (RH1, ..., RHk) an verschiedenen Orten im Fahrzeug vorgesehen sind, und wobei Daten (PF1) von hoher Priorität und hoher zeitlicher Dringlichkeit mit hohem Signalpegel (P1) und hoher Bitrate und Daten (PF4) von geringerer Priorität und geringerer zeitlicher Dringlichkeit mit niedrigem Signalpegel (P2) und niedriger Bitrate übertragen werden, **dadurch gekennzeichnet, daß** außerdem Daten (PF2) von hoher Priorität und geringerer zeitlicher Dringlichkeit mit hohem Signalpegel (P1) und niedriger Bitrate und Daten (PF3) von geringerer Priorität und hoher zeitlicher Dringlichkeit mit niedrigem Signalpegel (P2) und hoher Bitrate übertragen werden.

2. Verfahren nach Anspruch 1, **dadurch gekennzeichnet, daß** von der zentralen Steuereinheit (ZS) an ein oder mehrere Datenverarbeitungseinheiten (DV1, DV2) ausgesendete Auslösebefehle als Daten (PF1) mit hoher Priorität und hoher zeitlicher Dringlichkeit behandelt werden.

3. Verfahren nach Anspruch 1, **dadurch gekennzeichnet, daß** von der zentralen Steuereinheit (ZS) an Datenverarbeitungseinheiten (DV1, DV2) ausgesendete Diagnoseabfragen und in umgekehrte Richtung zurückgesendete Diagnoseantworten als Daten (PF4) mit geringerer Priorität und geringerer zeitlicher Dringlichkeit behandelt werden.

4. Verfahren nach Anspruch 1, **dadurch gekennzeichnet, daß** von der zentralen Steuereinheit (ZS) an Datenverarbeitungseinheiten (DV1, DV2) ausgesendete Daten (PF2) zur Programmierung von Adresspeichern in den Datenverarbeitungseinheiten (DV1, DV2) als Daten (PF2) mit hoher Priorität und geringerer zeitlicher Dringlichkeit behandelt werden.

5. Verfahren nach Anspruch 1, **dadurch gekennzeichnet, daß** zwischen der zentralen Steuereinheit (ZS) und Datenverarbeitungseinheiten (DV1, DV2) übertragene Sensorsignale - vorzugsweise Sitzbelegungssensorsignale - als Daten (PF3) mit geringerer Priorität und hoher zeitlicher Dringlichkeit behandelt werden.

## Claims

1. Method for data transfer is a vehicle-occupant restraint system networked via a bus line, a central control unit (ZS) and a plurality of data processing units (DV1, DV2), which are provided for activating restraint devices (RH1, ..., RHk) at various locations in the vehicle, being coupled to the bus line (BL), and data (PF1) of high priority and high time precedents being transferred at a high signal level (P1) and high bit rate, and data (PF4) of lower priority and lower time precedents being transferred at a low signal level (P2) and low bit rate, **characterized in that**, in addition, data (PF2) of high priority and lower time precedents being transferred at a high signal level (P1) and low bit rate, and data (PF3) of lower priority and high time precedents being transferred at a low signal level (P2) and high bit rate.

2. Method according to Claim 1, **characterized in that** initiating commands sent to one or more data processing units (DV1, DV2) by the central control unit (ZS) are treated as data (PF1) of high priority and high time precedents.

3. Method according to Claim 1, **characterized in that** diagnosis enquiries sent to data processing units (DV1, DV2) by the central control unit (ZS) and diagnosis responses sent back in the opposite direction are treated as data (PF4) of lower priority and lower time precedents.

4. Method according to Claim 1, **characterized in that** data (PF2) which are sent to data processing units (DV1, DV2) by the central control unit (ZS) and are intended for programming address stores in the data processing units (DV1, DV2) are treated as data (PF2) of high priority and lower time precedents.

5. Method according to Claim 1, **characterized in that** sensor signals - preferably seat-occupation sensor signals - which are transferred between the central control unit (ZS) and data processing units (DV1, DV2) are treated as data (PF3) of lower priority and high time precedents.

## Revendications

1. Procédé de transmission de données dans un système de retenue de passagers, relié par un bus, selon lequel
le bus (BL) comporte une unité de commande centrale (ZS) et plusieurs unités de traitement de données (DV1, DV2) prévues pour commander des installations de retenue (RH1, ..., RHk) en différents emplacements du véhicule, et
les données (PF1) de plus grande priorité et de plus grande urgence dans le temps sont transmises avec un niveau de signal plus élevée (P1) et un débit de bit plus élevé et les données (PF4) de moindre priorité et de moindre urgence sont transmises avec un niveau de signal (P2) plus faible et un débit de bit plus faible,
**caractérisé en ce qu'**
en outre on transmet des données (PF2) de priorité élevée et d'urgence faible, avec un niveau de signal élevé (P1) et un débit de bit faible et des données (PF3) de priorité faible et d'urgence élevée, avec un niveau de signal faible (P2) et un débit de bit élevé.

2. Procédé selon la revendication 1,
**caractérisé en ce que**
l'unité de commande centrale (ZS) traite les ordres de déclenchement envoyés à une ou plusieurs unités de traitement de données (DV1, DV2) comme des données (PF1) de priorité élevée et d'urgence élevée.

3. Procédé selon la revendication 1,
**caractérisé en ce que**
les requêtes de diagnostic émises par l'unité de commande centrale (ZS) vers les unités de traitement de données (DV1, DV2) et les réponses de diagnostic envoyées dans la direction inverse sont traitées comme des données (PF4) de priorité faible et d'urgence faible.

4. Procédé selon la revendication 1,
**caractérisé en ce que**
les données (PF2) envoyées par l'unité de commande centrale (ZS) aux unités de traitement de données (DV1, DV2) pour programmer des mémoires d'adresse dans les unités de traitement de données (DV1, DV2) sont traitées comme des données (PF2) de priorité élevée et de faible urgence.

5. Procédé selon la revendication 1,
**caractérisé en ce que**
les signaux de capteur, notamment les signaux de capteur d'occupation de siège, transmis entre l'unité de commande centrale (ZS) et les unités de traitement de données (DV1, DV2) sont traités comme des données (PF3) de priorité faible et d'urgence élevée.
